# EUROPÄISCHE PATENTSCHRIFT

(11) **EP 2 431 597 B1**
(45) Veröffentlichungstag und Bekanntmachung des Hinweises auf die Patenterteilung: **15.07.2015**
(21) Anmeldenummer: 11007503.3
(22) Anmeldetag: 14.09.2011
(51) Int. Cl.: F02D 41/38, F02M 37/00, F02D 41/00, F02D 19/06, G01N 11/10

(54) **Verfahren und Vorrichtung zum Detektieren eines Kraftstoffes in einem Kraftstoffzuführungssystem einer Brennkraftmaschine**
Method and device for detecting a fuel in a fuel supply system of a combustion engine
Procédé et dispositif de détection d'un carburant dans un système d'alimentation en carburant d'un moteur à combustion interne

(30) Priorität: 15.09.2010 DE 102010045520
(43) Veröffentlichungstag der Anmeldung: 21.03.2012
(73) Patentinhaber: Volkswagen Aktiengesellschaft, 38440 Wolfsburg (DE)
(72) Erfinder: Schmerbeck, Stefan, 38118 Braunschweig (DE); Klüting, Christian, 38440 Wolfsburg (DE); Klingemann, Timo, 38547 Calberlah (DE)

(56) Entgegenhaltungen:
- EP-A1- 0 014 164
- EP-A1- 0 165 156
- DE-A1-102007 034 585
- DE-A1-102009 012 446
- FR-A1- 2 588 083
- JP-A- 63 313 065

## Beschreibung

Die Erfindung betrifft ein Verfahren zum Detektieren einer Viskosität eines Kraftstoffes in einem Kraftstoffzuführungssystem einer Brennkraftmaschine, gemäß dem Oberbegriff des Patentanspruchs 1. Die Erfindung betrifft ferner ein Kraftstoffzuführungssystem mit einer Vorrichtung zum Bestimmen der Viskosität eines Kraftstoffes in dem Kraftstoffzuführsystem einer Brennkraftmaschine, gemäß dem Oberbegriff des Patentanspruchs 15.

Der Einsatz anderer flüssiger Kraftstoffe bzw. derer Gemische als der typischen Kraftstoffe, wie beispielsweise Diesel- und Ottokraftstoff-Mischungen, erfordert im entsprechenden Motor Regelstrategien zur Beherrschung und Optimierung der Verbrennung. Für die Anwendung der Regelstrategien ist die Erkennung des jeweils in dem Kraftstoffzuführungssystem vorhandenen Kraftstoffs bzw. des Kraftstoffgemisches notwendig.

Bei dem Betrieb einer Brennkraftmaschine mit unterschiedlichen Kraftstoffarten bzw. Kraftstoffsorten ist für die gleichzeitige Erfüllung der Ziele Komfort, Emissionen und Verbrauch eine Ermittlung der für die Verbrennung entscheidenden Kraftstoffkennwerte (z.B. Cetanzahl und Siedelage) des jeweils gerade in einem Kraftstoffzuführungssystem vorhandenen Kraftstoffes, notwendig. Dieser jeweils gerade in dem Kraftstoffzuführungssystem vorhandene Kraftstoff ist beispielsweise ein Reinkraftstoff, wie beispielsweise Diesel, Benzin, Naphtha, Kerosin, Alkohol, Butanol, insbesondere Methanol, GTL (gas to liquid) oder BTL (biomass to liquid), oder ein Gemisch aus mindestens zwei Reinkraftstoffen.

Aus der DE 10 2007 052 096 B4 ist ein Verfahren zur Erkennung einer Kraftstoffsorte, die über eine Einspritzanlage in einen Brennraum einer Brennkraftmaschine eingespritzt wird, bekannt. Hierbei wird in einem Hochdruckbereich der Einspritzanlage ein Druck über der Zeit gemessen und in Phasen, während derer die Hochdruckpumpe keinen Kraftstoff fördert, die Bilanzgleichung des hydraulischen Systems über einen betrachteten Zeitraum integriert. Aus für jeden Kraftstoff bekannten Kennkurven des Kompressibilitätsmoduls und der Dichte in Abhängigkeit vom Druck wird unter Verwendung der aus diesen Kennkurven bei einem in der Einspritzphase gemessenen Druck gefundenen Werten für Kompressibilitätsmodul und Dichte in einem Trial-and-Error-Verfahren die Druckdifferenz aus der integrierten Bilanzgleichung bestimmt. Dasjenige Paar von Kompressibilitätsmodul und Dichte, welches am besten die über den betrachteten Zeitbereich gemessene Druckdifferenz reproduziert, wird zur Erkennung des Kraftstoffs herangezogen. Mit anderen Worten wird innerhalb einer Förderpause einer Kraftstoffpumpe eine definierte Einspritzung mit einer aus einem Kennfeld bekannten Menge ausgelöst. Da nicht nachgefördert wird, bedingt die Kompressibilität des Kraftstoffes die Menge bei bekanntem Druck und bekannter Temperatur. Die unterschiedlichen Kompressibilitäten und Dichten der unterschiedlichen, zu erwartenden Kraftstoffe sind in Tabellen abgelegt. Dadurch kann mittels des bekannten Volumens des Hochdruckbereiches der Einspritzanlage auf den vorhandenen Kraftstoff geschlossen werden.

Aus der DE 10 2008 026 009 A1 ist ein Verfahren zur Bestimmung der Viskosität und Elastizität von viskoelastischen Medien mittels akustoelektrischen Resonatoren bekannt. Hierbei wird eine Funktion, welche die elektrische Admittanz des akustoelektrischen Resonators beschreibt optimiert, indem diese Funktion iterativ an einen gemessenen Admittanzverlauf des akustoelektrischen Resonators mit auf diesem aufgebrachtem Messmedium angepasst wird. Der angepassten Funktion kann dann die Viskosität und Elastizität des Messmediums als Parameter entnommen werden.

Aus der DE 10 2004 008 150 A1 ist eine On-Board-Messung von Kraftstoffeigenschaften zum Motormanagement bekannt. Hierbei wird mittels einer Heizung ein definiertes Volumen von Kraftstoff verdampft. Die Zeit und die Heizungsenergie, die hierfür nötig ist, wird gemessen und daraus ein Kraftstoffdestillations-Betriebsverhaltensindex (DI) bestimmt. Der DI-Wert ist ein Maß für die Kraftstoffflüchtigkeit und wird dann dazu verwendet, den Betrieb des Motors zu steuern, um Schadstoffe zu reduzieren und die Leistung zu verbessern.

Aus der DE 40 19 187 C2 ist es bekannt, eine Treibstoffzusammensetzung mittels eines kapazitiven, dielektrischen Sensors zu bestimmen, welcher die Dielektrizitätskonstante des Treibstoffs misst.

In der DE 10 2007 034585 A1 und der JP 63 313065 A ist offenbart, dass Eigenschaften von Fluiden, u.a. die Viskosität eines Kraftstoffs, dadurch ermittelt werden können, dass ein Körper mit definierter Kraft durch das Fluid bewegt wird und von der für einen definierten Weg erforderlichen Bewegungszeit des Körpers auf die Viskosität geschlossen wird.

Der Erfindung liegt die Aufgabe zugrunde, ein einfaches und genaues Verfahren zur Ermittlung der Viskosität eines einer Brennkraftmaschine zugeführten Kraftstoffs zur Verfügung zu stellen.

Diese Aufgabe wird erfindungsgemäß durch ein Verfahren der o.g. Art mit den in Anspruch 1 gekennzeichneten Merkmalen und durch ein Kraftstoffzuführungssystem der o.g. Art mit den in Anspruch 15 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass ein Verdrängerkörper in einem mit dem Kraftstoff in dem Kraftstoffzuführungssystem der Brennkraftmaschine blasenfrei befüllten Hohlraum von einer ersten vorbestimmten Position zu einer zweiten vorbestimmten Position bewegt wird, wobei aus der für die Bewegung erforderlichen Bewegungszeit und/oder aus der für die Bewegung mit einer vorbestimmten Geschwindigkeit erforderlichen Bewegungskraft eine Viskosität des in dem Kraftstoffzuführungssystem der Brennkraftmaschine vorhandenen Kraftstoffes bestimmt wird wobei der Kraftstoff dem parallel zu einer Kraftstoffleitung in das Kraftstoffzuführungssystem integrierten Hohlraum mittels eines Zulaufs und über ein 2/2-Wege-Ventil aus der Kraftstoffleitung zugeführt und mittels eines Ablaufs und über ein Rückschlagventil der Kraftstoffleitung wieder zugeführt wird.

Dies hat den Vorteil, dass mit geringer Komplexität eine funktionssichere Detektion von für die Verbrennung in der Brennkraftmaschine relevanten Eigenschaften des Kraftstoffes mittels der Viskosität zur Verfügung steht.

Eine besonders gute Abhängigkeit der Bewegungszeit und/oder der Bewegungskraft von der Viskosität des Kraftstoffes in dem Kraftstoffzuführungssystem der Brennkraftmaschine erzielt man dadurch, dass der Verdrängerkörper derart in dem Hohlraum bewegt wird, dass sich in einem Spalt zwischen dem Verdrängerkörper und dem Hohlraum eine Scherströmung des Kraftstoffes ergibt.

Eine besonders genaue Bestimmung der Viskosität mittels einer Bewegungszeit über eine vorbestimmte Strecke mit konstanter Bewegungskraft erzielt man dadurch, dass der Verdrängerkörper in Form eines Kolbens in dem Hohlraum in Form eines Kapillarrohres bewegt wird, wobei der Kolben von einer Feder mit konstanter Bewegungskraft von der ersten vorbestimmten Position in die zweite vorbestimmte Position bewegt und die Bewegungszeit für die Bewegung von der ersten vorbestimmten Position in die zweite vorbestimmte Position bestimmt wird.

Eine genaue Bestimmung der Viskosität bei mechanisch vereinfachtem Aufbau erzielt man dadurch, dass der Verdrängerkörper in Form eines Kolbens in dem Hohlraum in Form eines beidseits offenen Zylinders derart bewegt wird, dass sich zwischen dem Kolben und dem Zylinder eine Scherströmung ergibt, wobei der Kolben mit konstanter Geschwindigkeit von der ersten vorbestimmten Position in die zweite vorbestimmte Position bewegt und die hierfür erforderliche Bewegungskraft für die Bewegung von der ersten vorbestimmten Position in die zweite vorbestimmte Position bestimmt wird.

Eine weitere Verbesserung der Genauigkeit der Bestimmung des Viskosität erzielt man dadurch, dass der Verdrängerkörper in Form eines Membrankolbens in dem Hohlraum in Form eines Kapillarrohres bewegt wird, wobei der Membrankolben von einer Feder mit konstanter Bewegungskraft (bekannter Kraft-Weg-Verlauf ist hinreichend konstant; Kraft ideal) von der ersten vorbestimmten Position in die zweite vorbestimmte Position bewegt und die Bewegungszeit für die Bewegung von der ersten vorbestimmten Position in die zweite vorbestimmte Position bestimmt wird.

Eine blasenfreie Durchströmung des Hohlraumes mit Kraftstoff aus dem Kraftstoffzuführungssystem der Brennkraftmaschine erzielt man beispielsweise dadurch, dass ein Zufluss für Kraftstoff in den Hohlraum über ein 2/2-Wege-Ventil mit dem Kraftstoffzuführungssystem der Brennkraftmaschine fluidleitend verbunden ist und dass ein Abfluss für Kraftstoff aus dem Hohlraum über ein Rückschlagventil mit dem Kraftstoffzuführungssystem der Brennkraftmaschine fluidleitend verbunden ist.

Eine besonders schnelle und funktionssichere Bestimmung der Dichte des Kraftstoffes erzielt man dadurch, dass die Viskosität aus einer Tabelle ausgelesen wird, in der Zuordnungen von Bewegungszeit und/oder Bewegungskraft mit der Viskosität des Kraftstoffes hinterlegt sind.

Eine Bestimmung von verschiedenen Kraftstoffsorten in dem Kraftstoff, welcher in dem Kraftstoffzuführungssystem der Brennkraftmaschine vorhanden ist, erzielt man dadurch, dass aus der bestimmten Viskosität alle in dem Kraftstoff in dem Kraftstoffzuführungssystem der Brennkraftmaschine vorhandenen Kraftstoffarten, insbesondere Diesel, Benzin, Naphtha, Kerosin, Alkohol, Butanol, insbesondere Methanol, GTL (gas to liquid) oder BTL (biomass to liquid), bestimmt werden.

Zum optimalen Einstellen von Parametern für die Verbrennung, wie Einspritzzeitpunkt und/oder Ansteuerdauer, im Hinblick auf den momentan in dem Kraftstoffzuführungssystem der Brennkraftmaschine vorhandenen Kraftstoff wird aus der bestimmten Viskosität mindestens ein motorrelevanter Parameter, insbesondere eine Cetanzahl und/oder eine Siedelage, des Kraftstoffes in dem Kraftstoffzuführungssystem der Brennkraftmaschine bestimmt.

Zur Korrektur des Ausdehnungskoeffizienten des Kraftstoffes wird gleichzeitig mit der Bestimmung der Viskosität eine Temperatur des Kraftstoffes im Bereich des Verdrängerkörpers und/oder eine Temperatur des Verdrängerkörpers bestimmt und die Viskosität zusätzlich in Abhängigkeit von der Temperatur bestimmt. Hierbei wird bevorzugt mittels der bestimmten Temperatur eine Viskosität des Kraftstoffes bei einer vorbestimmen Standardtemperatur, insbesondere 15°C, bestimmt.

Eine besonders schnelle und effektive Anpassung der Verbrennung an den jeweils im Kraftstoffzuführungssystem der Brennkraftmaschine vorhandenen Kraftstoff erzielt man dadurch, dass für vorbestimmte Mehrkraftstoffgemische, insbesondere Gemische mit mindestens zwei der Kraftstoffsorten Diesel, Benzin, Naphtha, Kerosin, Butanol, GTL (gas to liquid) oder BTL (biomass to liquid), eine energetische Einspritzmenge in Abhängigkeit von der bestimmten Viskosität korrigiert wird.

Weiterhin ist bei einer Vorrichtung eines Kraftstoffzuführungssystems der o.g. Art erfindungsgemäß vorgesehen, dass diese einen mit dem Kraftstoff blasenfrei befüllbaren Hohlraum aufweist, in dem ein von einer ersten vorbestimmten Position zu einer zweiten vorbestimmten Position verschiebbarer Verdrängerkörper angeordnet ist, wobei der Hohlraum parallel zu einer Kraftstoffleitung in das Kraftstoffzuführungssystem integriert ist und wobei der Hohlraum mittels eines Zulaufs für den Kraftstoff und über ein 2/2-Wege-Ventil sowie mittels eines Ablaufs für den Kraftstoff und über ein Rückschlagventil fluidleitend mit der Kraftstoffleitung verbunden ist.

Dies hat den Vorteil, dass eine einfache Bestimmung der Viskosität des Kraftstoffes über eine Bewegungszeit des Verdrängerkörpers bei konstanter auf diesen wirkenden Bewegungskraft und/oder eine auf den Verdrängerkörper wirkende Bewegungskraft für eine vorbestimmte translatorische Bewegung, beispielsweise eine translatorische Bewegung mit vorbestimmter Geschwindigkeit, erzielt wird.

Eine besonders hohe Korrelation zwischen der Bewegung des Verdrängerkörpers und der Viskosität des in dem Hohlraum vorhandenen Kraftstoffes erzielt man dadurch, dass der Hohlraum und der Verdrängerkörper derart angeordnet und ausgebildet sind, dass sich bei einer Bewegung des Verdrängerkörpers in einem Spalt zwischen dem Verdrängerkörper und dem Hohlraum eine Scherströmung ausbildet.

Einen mechanisch besonders einfachen Aufbau erzielt man dadurch, dass der Verdrängerkörper ein Kolben oder ein Membrankolben ist.

Eine Bestimmung der Viskosität des in dem Hohlraum vorhandenen Kraftstoffes mittels einer Bewegungszeit für eine Bewegung des Verdrängerkörpers von der ersten vorbestimmten Position zu einer zweiten vorbestimmten Position erzielt man dadurch, dass in dem Hohlraum eine mechanische Federeinrichtung, insbesondere eine Schraubenfeder, Blattfeder oder eine Gasdruckfeder, derart angeordnet und ausgebildet ist, dass diese mechanische Federeinrichtung den Verdrängerkörper mit einer vorbestimmten Bewegungskraft von der ersten vorbestimmten Position zu einer zweiten vorbestimmten Position bewegt.

Eine Bestimmung der Viskosität des in dem Hohlraum vorhandenen Kraftstoffes mittels einer notwendigen Bewegungskraft für eine Bewegung des Verdrängerkörpers von der ersten vorbestimmten Position zu einer zweiten vorbestimmten Position mit vorbestimmter Geschwindigkeit erzielt man dadurch, dass in dem Hohlraum eine mechanische Translationseinrichtung derart angeordnet und ausgebildet ist, dass diese mechanische Translationseinrichtung den Verdrängerkörper mit einer vorbestimmten Geschwindigkeit von der ersten vorbestimmten Position zu einer zweiten vorbestimmten Position bewegt.

Um einen möglichst blasenfreien Kraftstoff in dem Hohlraum zu erhalten, kann vorgesehen sein, die erfindungsgemäße Vorrichtung als geschlossenes System, d.h. lediglich mit Anschlüssen (Zulauf und Ablauf) an Leitungen des Kraftstoffsystems bzw. ohne Anschluss an die Atmosphäre auszubilden. Dadurch wird die bevorzugt verwirklichte Möglichkeit geschaffen, den Kraftstoff in dem Hohlraum unter Druck vorzuhalten, was eine (Dampf-)Blasenbildung wirksam verhindert.

Das Vorhalten des Kraftstoffs unter Druck kann dadurch erreicht werden, dass die erfindungsgemäße Vorrichtung in einem erfindungsgemäßen Kraftstoffzuführungssystem, das neben der Vorrichtung zumindest noch einen Kraftstofftank, die Kraftstoffleitung und einen Rücklauf für den Kraftstoff umfasst, stromab einer Pumpe (für den Kraftstoff) angeordnet ist. Bei der Pumpe kann es sich vorzugsweise um eine Niederdruck-Pumpe wie beispielsweise eine Vorförderpumpe handeln.

Die Erfindung wird im Folgenden anhand der Zeichnungen näher erläutert. Diese zeigen in
- Fig. 1: eine erste bevorzugte Ausführungsform eines erfindungsgemäßen Kraftstoffzuführungssystems einer Brennkraftmaschine mit einer Vorrichtung zum Ausführen des erfindungsgemäßen Verfahrens in einem schematischen Blockschaltbild ,
- Fig. 2: eine zweite bevorzugte Ausführungsform eines erfindungsgemäßen Kraftstoffzuführungssystems mit einer Vorrichtung zum Ausführen des erfindungsgemäßen Verfahrens in einem schematischen Blockschaltbild und
- Fig. 3: eine dritte bevorzugte Ausführungsform eines erfindungsgemäßen Kraftstoffzuführungssystems mit einer Vorrichtung zum Ausführen des erfindungsgemäßen Verfahrens in einem schematischen Blockschaltbild.

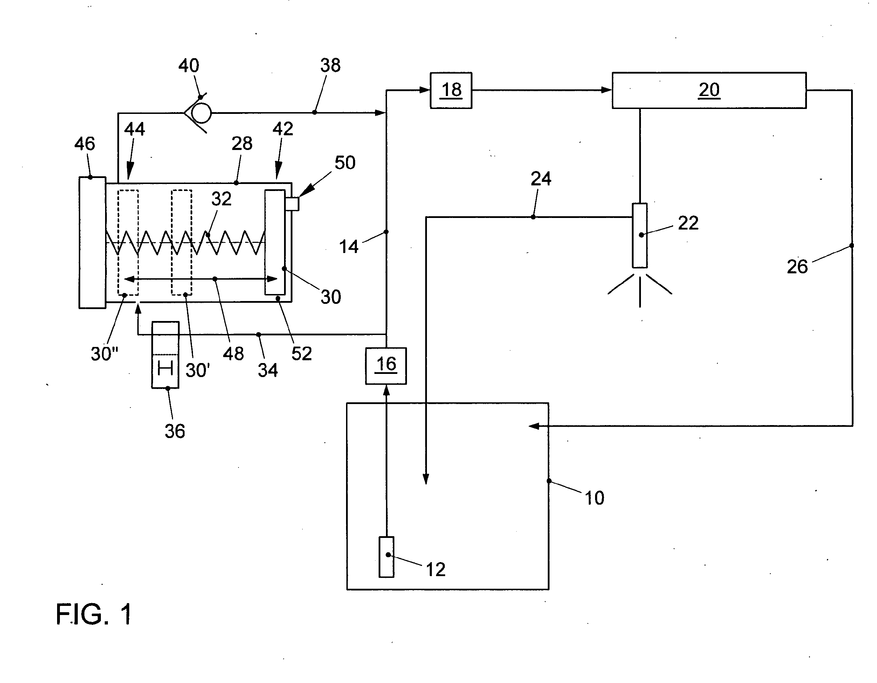

Fig. 1 zeigt beispielhaft und schematisch ein Kraftstoffzuführungssystem einer ansonsten nicht näher dargestellten Brennkraftmaschine mit einem Kraftstofftank 10, einer Vorförderpumpe 12, einer Kraftstoffleitung 14, einem Filter 16, einer Hockdruckpumpe 18, einem Common Rail 20, einem Injektor 22 für jeden Arbeitszylinder (nicht dargestellt) der Brennkraftmaschine, einem ersten Rücklauf 24 aus dem Injektor 22 in den Kraftstofftank 10 und einem zweiten Rücklauf 26 aus dem Common Rail 20 in den Kraftstofftank 10.

Die in Fig. 1 dargestellte, erste bevorzugte Ausführungsform einer Vorrichtung zum Bestimmen der Viskosität eines Kraftstoffes in einem erfindungsgemäßen Kraftstoffzuführungssystem einer Brennkraftmaschine zum Ausführen des erfindungsgemäßen Verfahrens umfasst einen Hohlraum 28 in Form eines Kapillarrohres, in dem ein Verdrängerkörper 30 in Form eines Kolbens angeordnet ist. Der Kolbens ist mittels einer Feder 32 von einer ersten vorbestimmten Position 44 innerhalb des Hohlraumes 28 zu einer zweiten vorbestimmten Position 42 innerhalb des Hohlraumes 28 mit einer vorbestimmten konstanten Bewegungskraft bewegbar. Ein Zulauf 34 für Kraftstoff verbindet den Hohlraum 28 fluidleitend mit der Kraftstoffleitung 14 über ein 2/2-Wege-Ventil 36 und ein Ablauf 38 für Kraftstoff verbindet den Hohlraum 28 fluidleitend mit der Kraftstoffleitung 14 über ein Rückschlagventil 40. Über den Zulauf 34 und den Ablauf 38 strömt Kraftstoff aus dem Kraftstoffzuführungssystem über den Hohlraum 28 und füllt diesen blasenfrei. Ein Elektromagnet 46 bewegt den Kolben entgegen einer Rückstellkraft der Feder 32 in die erste vorbestimmte Position 44. Die Feder 32 bringt eine vorbestimmte Bewegungskraft auf, um den Kolben von der ersten vorbestimmten Position 44 durch den Kraftstoff im Hohlraum 28 hindurch über eine Wegstrecke 48 bis zur zweiten vorbestimmten Position 42 zu bewegen, wo ein Detektor 50, beispielsweise ein Mikroschalter, die Ankunft des Kolbens an der zweiten vorbestimmten Position 42 detektiert. In Fig. 1 bezeichnet 30 den Kolben an der zweiten vorbestimmten Position 42, 30' den Kolben an einer Position zwischen der ersten und zweiten Position 42, 44 und 30" den Kolben an der ersten vorbestimmten Position 44.

Eine für diese Translationsbewegung des Kolbens von der ersten vorbestimmten Position 44 zur zweiten vorbestimmten Position 42 erforderliche Bewegungszeit wird gemessen und aus dieser Bewegungszeit wird eine Viskosität des Kraftstoffs in dem Hohlraum 28 bestimmt. Aus der Viskosität wird dann auf eine Mischung des Kraftstoffes aus verschiedenen Kraftstoffarten, wie beispielsweise Diesel, Benzin, Naphtha, Kerosin, Alkohol, insbesondere Methanol, Butanol, GTL (gas to liquid) oder BTL (biomass to liquid), geschlossen. Hierzu sind beispielsweise entsprechende Tabellen mit Zuordnungen von Mischungsverhältnissen und Viskositäten vorgesehen. Aus der Viskosität werden ggf. auch direkt entsprechende verbrennungsrelevante Eigenschaften des Kraftstoffes bestimmt.

Eine Temperaturkompensation ist beispielsweise mit einem serienmäßig vorhandenen Kraftstofftemperaturgeber vorgesehen. Durch das 2/2-Wege-Ventil 36 und das Rückschlagventil 40 ist sichergestellt, dass die für den Tank 10 repräsentative Mischung im Messsystem (frei von Gasblasen) vorhanden ist und dass das Messergebnis nicht durch undefinierte Durchströmung beeinflusst wird.

Optional sind der Kolben und der Hohlraum 28 derart ausgebildet, dass sich zwischen diesen beiden ein Spalt 52 ergibt. Durch diesen Spalt 52 ergibt sich eine Scherströmung des Kraftstoffes während der Bewegung des Kolbens.

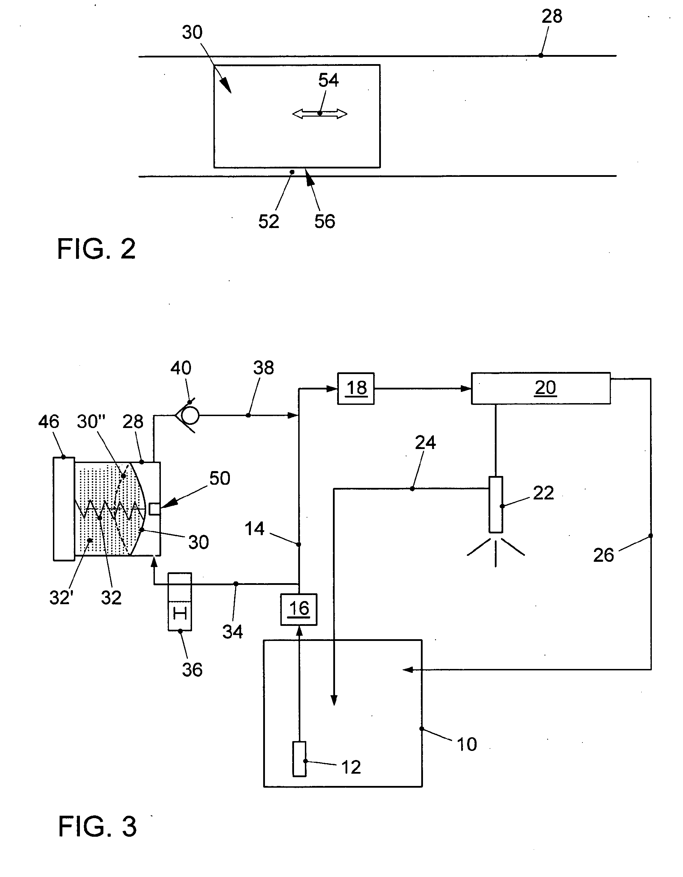

Fig. 2 zeigt eine zweite bevorzugte Ausführungsform eines erfindungsgemäßen Kraftstoffzuführungssystems, mit einer Vorrichtung zur Ausführung des erfindungsgemäßen Verfahrens, wobei funktionsgleiche Teile mit gleichen Bezugszeichen bezeichnet sind, wie in Fig. 1, so dass zu deren Erläuterung auf die obige Beschreibung der Fig. 1 verwiesen wird. Im Gegensatz zur ersten Ausführungsform gemäß Fig. 1 ist der Hohlraum 28 als offener Zylinder ausgebildet und der Kolben wird mit einer vorbestimmten Geschwindigkeit durch den Hohlraum 28 bewegt. Die hierfür erforderliche Bewegungskraft 54 wird gemessen und aus dieser Bewegungskraft 54 wird eine Viskosität des Kraftstoffs in dem Hohlraum 28 bestimmt. Diese so bestimmte Viskosität des Kraftstoffs wird entsprechend, wie in Bezug auf Fig. 1 beschrieben, weiter ausgewertet, um Kraftstoffeigenschaften und Mischungsanteile von Kraftstoffarten in dem Kraftstoff zu bestimmen.

Die Korrelation zwischen Viskosität und der erforderlichen Bewegungskraft zur translatorischen Bewegung des Kolbens in dem "offenen" Zylinder 28 ergibt sich insbesondere daraus, dass sich eine Scherströmung 56 im Spalt 52 zwischen Kolben und Zylinder 28 abhängig von der Viskosität ändert. Eine Temperaturkompensation ist beispielsweise mit dem serienmäßig vorhandenen Kraftstofftemperaturgeber vorzusehen. Das Messvolumen ist ebenso wie bei der ersten Ausführungsform gemäß Fig. 1 gegen Quereinflüsse durch Strömung abzusichern, z.B. durch Ausführung als geschlossenes System.

Fig. 3 zeigt eine dritte bevorzugte Ausführungsform eines erfindungsgemäßen Kraftstoffzuführungssystems mit einer Vorrichtung zur Ausführung des erfindungsgemäßen Verfahrens, wobei funktionsgleiche Teile mit gleichen Bezugszeichen bezeichnet sind, wie in Fig. 1, so dass zu deren Erläuterung auf die obige Beschreibung der Fig. 1 verwiesen wird. Im Gegensatz zur ersten Ausführungsform gemäß Fig. 1 ist der Verdrängerkörper 30 als Membrankolben ausgebildet und es ist kein Spalt 52 vorgesehen.

Der in dem Kapillarrohr 28 angeordnete, federbelastete Verdrängerkörper 30 in Form des Membrankolbens weist nach Anzug z.B. durch das Magnetventil 46 in Abhängigkeit von der Viskosität des Kraftstoffs bei konstanter Federrückstellkraft eine charakteristische, messbare Rücklaufzeit bzw. Bewegungszeit auf. Eine Temperaturkompensation ist beispielsweise mit dem serienmäßig vorhandenen Kraftstofftemperaturgeber vorgesehen. Die Feder ist beispielsweise durch ein eingeschlossenes Gasvolumen 32' (Gasdruckfeder) dargestellt.

Die Vorspannung des Membrankolbens ist beispielsweise derart ausgelegt, dass der Membrankolben im durch die Federkräfte gespannten Zustand den Detektor 50 betätigt. Die Zeit zwischen den Zuständen "E-Magnet 46 stromlos" und "Mikroschalter 50 betätigt" ist unter Berücksichtigung der Kraftstofftemperatur im Messsystem für die Viskosität des im Messsystems vorhandenen Kraftstoffs charakteristisch. Diese so aus der Bewegungszeit bestimmte Viskosität des Kraftstoffs wird entsprechend, wie in Bezug auf Fig. 1 beschrieben, weiter ausgewertet, um Kraftstoffeigenschaften und Mischungsanteile von Kraftstoffarten in dem Kraftstoff zu bestimmen.

Die Vorrichtung wird innerhalb eines Bauteils des erfindungsgemäßen Kraftstoffzuführungssystems (Tank 10, Niederdruckleitung 14, Common-Rail 20, Injektor 22 oder Filter 16), das gut durchströmt wird, eingebaut. Für ein binäres Kraftstoffgemisch sind die Viskositäten der einzelnen Kraftstoffe und die Mischviskosität bekannt. Aus der gemessenen Viskosität des Kraftstoffes im Hohlraum 28 lässt sich so, ggf. nach einer Temperaturkorrektur, das Mischungsverhältnis von Kraftstoffarten im Kraftstoff bestimmen. Die Temperaturkorrektur kompensiert den starken Abfall der Viskosität mit dem Anstieg der Temperatur.

Die Vorrichtungen sind, wie in den Fig. 1 und 3 dargestellt, vorzugsweise als geschlossene Systeme ausgebildet, wodurch die Blasenfreiheit des zu analysierenden Kraftstoffs gewährleistet werden kann. Insbesondere besteht die Möglichkeit, den Kraftstoff in der Vorrichtung mit einem definierten (Über-)Druck zu beaufschlagen, um den Erhalt eines blasenfreien Kraftstoffs zu unterstützen. Im übrigen wird dadurch, dass die Vorrichtung vorzugsweise in einen Abschnitt des Kraftstoffzuführungssystems integriert wird, in dem zumindest ein Teil des Kraftstoffs über den Kraftstofftank dauerhaft in einem Kreislauf gepumpt wird, sichergestellt, dass stets, z.B. nach einem Tankvorgang, der den Injektoren zugeführte Kraftstoff auch tatsächlich analysiert wird.

Alternativ erfolgt zusätzlich eine Kombination mit einem Verfahren zum Detektieren eines Kraftstoffes in einem Kraftstoffzuführungssystem einer Brennkraftmaschine, wobei eine Resonanzfrequenz eines von dem Kraftstoff in dem Kraftstoffzuführungssystem der Brennkraftmaschine umspülten Schwingquarzes bestimmt und aus der Resonanzfrequenz eine Dichte des Kraftstoffes in dem Kraftstoffzuführungssystem der Brennkraftmaschine bestimmt wird.

Dies hat den Vorteil, dass mit geringer Komplexität eine funktionssichere und schnelle Detektion von für die Verbrennung in der Brennkraftmaschine relevanten Eigenschaften des Kraftstoffes zur Verfügung steht.

Eine besonders einfache und funktionssichere Bestimmung der Dichte des Kraftstoffes erzielt man dadurch, dass die bestimmte Resonanzfrequenz mit einer Resonanzfrequenz des Schwingquarzes in einem Referenzmedium, insbesondere in Vakuum oder Luft, verglichen und aus einer Differenz zwischen diesen beiden Resonanzfrequenzen die Dichte des Kraftstoffes in dem Kraftstoffzuführungssystem der Brennkraftmaschine bestimmt wird.

Eine besonders schnelle und funktionssichere Bestimmung der Dichte des Kraftstoffes erzielt man dadurch, dass die Dichte aus einer Tabelle ausgelesen oder eine bekannte Funktionsgleichung bestimmt wird, in der Zuordnungen von Resonanzfrequenz und Dichte des Kraftstoffes hinterlegt sind.

Eine Bestimmung von verschiedenen Kraftstoffsorten in dem Kraftstoff, welcher in dem Kraftstoffzuführungssystem der Brennkraftmaschine vorhanden ist, erzielt man dadurch, dass aus der bestimmten Dichte alle in dem Kraftstoff in dem Kraftstoffzuführungssystem der Brennkraftmaschine vorhandenen Kraftstoffarten, insbesondere Diesel, Benzin, Naphtha, Kerosin, Alkohol, insbesondere Methanol, Butanol, GTL (gas to Liquid) oder BTL (biomass to liquid), bestimmt werden.

Zum optimalen Einstellen von Parametern für die Verbrennung, wie Einspritzzeitpunkt und/oder Einspritzparametrierung, im Hinblick auf den momentan in dem Kraftstoffzuführungssystem der Brennkraftmaschine vorhandenen Kraftstoff wird aus der bestimmten Dichte mindestens ein motorrelevanter Parameter, insbesondere eine Cetanzahl und/oder eine Siedelage, des Kraftstoffes in dem Kraftstoffzuführungssystem der Brennkraftmaschine bestimmt.

Zur Korrektur des Ausdehnungskoeffizienten des Kraftstoffes wird gleichzeitig mit der Bestimmung der Resonanzfrequenz eine Temperatur des Kraftstoffes im Bereich des Schwingquarzes und/oder eine Temperatur des Schwingquarzes bestimmt und die Dichte in Abhängigkeit von der Resonanzfrequenz und der Temperatur bestimmt. Hierbei wird bevorzugt mittels der bestimmten Temperatur eine Dichte des Kraftstoffes bei einer vorbestimmen Standardtemperatur, insbesondere 15°C, bestimmt.

Eine besonders schnelle und effektive Anpassung der Verbrennung an den jeweils im Kraftstoffzuführungssystem der Brennkraftmaschine vorhandenen Kraftstoff erzielt man dadurch, dass für vorbestimmte Mehrkraftstoffgemische, insbesondere Gemische mit mindestens zwei der Kraftstoffsorten Diesel, Benzin, Naphtha, Kerosin, GTL (gas to Liquid) oder BTL (biomass to liquid), Butanol, eine energetische Einspritzmenge in Abhängigkeit von der bestimmten Resonanzfrequenz korrigiert wird.

### Bezugszeichenliste

- 10: Kraftstofftank
- 12: Vorförderpumpe
- 14: Kraftstoffleitung
- 16: Filter
- 18: Hockdruckpumpe
- 20: Common Rail
- 22: Injektor
- 24: erster Rücklauf
- 26: zweiter Rücklauf
- 28: Hohlraum
- 30: Verdrängerkörper an zweiter vorbestimmter Position 42
- 30': Verdrängerkörper zwischen erster vorbestimmter Position 442 und zweiter vorbestimmter Position 42
- 30": Verdrängerkörper an erster vorbestimmter Position 44
- 32: Feder
- 32': Gasdruckfeder
- 34: Zulauf
- 36: 2/2-Wege-Ventil
- 38: Ablauf
- 40: Rückschlagventil
- 42: zweite vorbestimmte Position
- 44: erste vorbestimmte Position
- 46: Elektromagnet
- 48: Wegstrecke
- 50: Detektor
- 52: Spalt
- 54: Bewegungskraft
- 56: Scherströmung

## Patentansprüche

1. Verfahren zum Detektieren der Viskosität eines Kraftstoffes in einem Kraftstoffzuführungssystem einer Brennkraftmaschine, wobei ein Verdrängerkörper (30) in einem mit dem Kraftstoff in dem Kraftstoffzuführungssystem der Brennkraftmaschine blasenfrei befüllten Hohlraum (28) von einer ersten vorbestimmten Position (44) zu einer zweiten vorbestimmten Position (42) bewegt wird, wobei aus der für die Bewegung erforderlichen Bewegungszeit und/oder aus der für die Bewegung mit einer vorbestimmten Geschwindigkeit erforderlichen Bewegungskraft eine Viskosität des in dem Kraftstoffzuführungssystem der Brennkraftmaschine vorhandenen Kraftstoffes bestimmt wird **dadurch gekennzeichnet, dass** der Kraftstoff dem parallel zu einer Kraftstoffleitung (14) in das Kraftstoffzuführungssystem integrierten Hohlraum (28) mittels eines Zulaufs (34) und über ein 2/2-Wege-Ventil (36) aus der Kraftstoffleitung (14) zugeführt wird und mittels eines Ablaufs (38) und über ein Rückschlagventil (40) wieder der Kraftstoffleitung (14) zugeführt wird.

2. Verfahren nach Anspruch 1, **dadurch gekennzeichnet, dass** der Verdrängerkörper (30) derart in dem Hohlraum (28) bewegt wird, dass sich in einem Spalt (52) zwischen dem Verdrängerkörper (30) und dem Hohlraum (28) eine Scherströmung des Kraftstoffes ergibt.

3. Verfahren nach mindestens einem der vorhergehenden Ansprüche, **dadurch gekennzeichnet, dass** der Verdrängerkörper (30) in Form eines Kolbens in dem Hohlraum (28) in Form eines Kapillarrohres bewegt wird, wobei der Kolben von einer Feder (32) mit konstanter Bewegungskraft von der ersten vorbestimmten Position (44) in die zweite vorbestimmte Position (42) bewegt und die Bewegungszeit für die Bewegung von der ersten vorbestimmten Position (44) in die zweite vorbestimmte Position (42) bestimmt wird.

4. Verfahren nach mindestens einem der Ansprüche 1 oder 2, **dadurch gekennzeichnet, dass** der Verdrängerkörper (30) in Form eines Kolbens in dem Hohlraum (28) in Form eines beidseits offenen Zylinders derart bewegt wird, dass sich zwischen dem Kolben und dem Zylinder eine Scherströmung ergibt, wobei der Kolben mit konstanter Geschwindigkeit von der ersten vorbestimmten Position (44) in die zweite vorbestimmte Position (42) bewegt und die hierfür erforderliche Bewegungskraft für die Bewegung von der ersten vorbestimmten Position (44) in die zweite vorbestimmte Position (42) bestimmt wird.

5. Verfahren nach mindestens einem der Ansprüche 1 oder 2, **dadurch gekennzeichnet, dass** der Verdrängerkörper (30) in Form eines Membrankolbens in dem Hohlraum (28) in Form eines Kapillarrohres bewegt wird, wobei der Membrankolben von einer Feder (32) mit konstanter Bewegungskraft von der ersten vorbestimmten Position (44) in die zweite vorbestimmte Position (42) bewegt und die Bewegungszeit für die Bewegung von der ersten vorbestimmten Position (44) in die zweite vorbestimmte Position (42) bestimmt wird.

6. Verfahren nach mindestens einem der vorhergehenden Ansprüche, **dadurch gekennzeichnet, dass** ein Zufluss für Kraftstoff an den Hohlraum (28) über ein 2/2-WegeVentil (36) mit dem Kraftstoffzuführungssystem der Brennkraftmaschine fluidleitend verbunden ist.

7. Verfahren nach mindestens einem der vorhergehenden Ansprüche, **dadurch gekennzeichnet, dass** ein Abfluss für Kraftstoff aus dem Hohlraum (28) über ein Rückschlagventil (40) mit dem Kraftstoffzuführungssystem der Brennkraftmaschine fluidleitend verbunden ist.

8. Verfahren nach mindestens einem der vorhergehenden Ansprüche, **dadurch gekennzeichnet, dass** die Viskosität aus einer Tabelle ausgelesen oder einem Gleichungssatz bestimmt wird, in der Zuordnungen von Bewegungszeit und/oder Bewegungskraft mit der Viskosität des Kraftstoffes hinterlegt sind.

9. Verfahren nach mindestens einem der vorhergehenden Ansprüche, **dadurch gekennzeichnet, dass** aus der bestimmten Viskosität alle in dem Kraftstoff in dem Kraftstoffzuführungssystem der Brennkraftmaschine vorhandenen Kraftstoffarten, insbesondere Diesel, Benzin, Naphtha, Kerosin, Butanol, Alkohol, insbesondere Methanol, GTL (gas to liquid) oder BTL (biomass to liquid), bestimmt werden.

10. Verfahren nach mindestens einem der vorhergehenden Ansprüche, **dadurch gekennzeichnet, dass** aus der bestimmten Viskosität mindestens ein motorrelevanter Parameter, insbesondere eine Cetanzahl und/oder eine Siedelage, des Kraftstoffes in dem Kraftstoffzuführungssystem der Brennkraftmaschine bestimmt wird.

11. Verfahren nach mindestens einem der vorhergehenden Ansprüche, **dadurch gekennzeichnet, dass** gleichzeitig mit der Bestimmung der Viskosität eine Temperatur des Kraftstoffes im Bereich des Verdrängerkörpers (30) und/oder eine Temperatur des Verdrängerkörpers (30) bestimmt und die Viskosität zusätzlich in Abhängigkeit von der Temperatur bestimmt wird.

12. Verfahren nach Anspruch 11, **dadurch gekennzeichnet, dass** mittels der bestimmten Temperatur eine Viskosität des Kraftstoffes bei einer vorbestimmen Standardtemperatur, insbesondere 15°C, bestimmt wird.

13. Verfahren nach mindestens einem der vorhergehenden Ansprüche, **dadurch gekennzeichnet, dass** für vorbestimmte Mehrkraftstoffgemische, insbesondere Gemische mit mindestens zwei der Kraftstoffsorten Diesel, Benzin, Naphtha, Butanol, Kerosin, GTL (gas to liquid) oder BTL (biomass to liquid), eine energetische Einspritzmenge in Abhängigkeit von der bestimmten Viskosität korrigiert wird.

14. Verfahren nach mindestens einem der vorhergehenden Ansprüche, **dadurch gekennzeichnet, dass** der Kraftstoff in dem Hohlraum (28) unter einem Überdruck vorgehalten wird.

15. Kraftstoffzuführungssystem für eine Brennkraftmaschine mit einer Vorrichtung zum Bestimmen der Viskosität eines Kraftstoffes in dem Kraftstoffzuführsystemwobei die Vorrichtung einen mit dem Kraftstoff blasenfrei befüllbaren Hohlraum (28) aufweist, in dem ein von einer ersten vorbestimmten Position (44) zu einer zweiten vorbestimmten Position (42) verschiebbarer Verdrängerkörper (30) angeordnet ist, **dadurch gekennzeichnet, dass** der Hohlraum (28) parallel zu einer Kraftstoffleitung (14) in das Kraftstoffzuführungssystem integriert ist, wobei der Hohlraum (28) mittels eines Zulaufs (34) für den Kraftstoff und über ein 2/2-Wege-Ventil (36) sowie mittels eines Ablaufs (38) für den Kraftstoff und über ein Rückschlagventil (40) fluidleitend mit der Kraftstoffleitung (14) verbunden ist.

16. Kraftstoffzuführungssystem nach Anspruch 15, **dadurch gekennzeichnet, dass** der Hohlraum (28) und der Verdrängerkörper (30) derart angeordnet und ausgebildet sind, dass sich bei einer Bewegung des Verdrängerkörpers (30) in einem Spalt (52) zwischen dem Verdrängerkörper (30) und dem Hohlraum (28) eine Scherströmung ausbildet.

17. Kraftstoffzuführungssystem nach Anspruch 15 oder 16, **dadurch gekennzeichnet, dass** der Verdrängerkörper (30) ein Kolben oder ein Membrankolben ist.

18. Kraftstoffzuführungssystem nach mindestens einem der Ansprüche 15 bis 17, **dadurch gekennzeichnet, dass** in dem Hohlraum (28) eine mechanische Federeinrichtung, insbesondere eine Schraubenfeder oder eine Gasdruckfeder (32'), derart angeordnet und ausgebildet ist, dass diese mechanische Federeinrichtung den Verdrängerkörper (30) mit einer vorbestimmten Bewegungskraft (54) von der ersten vorbestimmten Position (44) zu einer zweiten vorbestimmten Position (42) bewegt.

19. Kraftstoffzuführungssystem nach mindestens einem der Ansprüche 15 bis 18, **dadurch gekennzeichnet, dass** in dem Hohlraum (28) eine mechanische Translationseinrichtung derart angeordnet und ausgebildet ist, dass diese mechanische Translationseinrichtung den Verdrängerkörper (30) mit einer vorbestimmten Geschwindigkeit von der ersten vorbestimmten Position (44) zu einer zweiten vorbestimmten Position (42) bewegt.

20. Kraftstoffzuführungssystem nach mindestens einem der Ansprüche 15 bis 19, **dadurch gekennzeichnet, dass** die Vorrichtung als geschlossenes System ausgebildet ist.

21. Kraftstoffzuführungssystem nach mindestens einem der Ansprüche 15 bis 20,
**gekennzeichnet durch** einen Kraftstofftank (10) und mindestens einen Rücklauf (24, 26) für den Kraftstoff, wobei Kraftstoff über den Kraftstofftank (10), die Kraftstoffleitung (14) und den Rücklauf (24, 26) in einem Kreislauf gefördert wird und wobei die Vorrichtung in den Kreislauf des Kraftstoffs integriert ist.

22. Kraftstoffzuführungssystem nach Anspruch 21, **dadurch gekennzeichnet, dass** die Vorrichtung stromab einer Pumpe angeordnet ist.

## Claims

1. Method for detecting the viscosity of a fuel in a fuel supply system of an internal combustion engine, wherein an expeller body (30) is moved into a cavity (28), filled without bubbles with the fuel in the fuel supply system of the internal combustion engine, from a first predetermined position (44) to a second predetermined position (42), wherein a viscosity of the fuel which is present in the fuel supply system of the internal combustion engine is determined from the movement time necessary for the movement and/or from the movement force which is necessary for the movement with a predetermined speed, **characterized in that** the fuel is supplied to the cavity (28) integrated into the fuel supply system parallel to a fuel line (14), by means of an inflow (34) and via a 2/2-way valve (36) from the fuel line (14) and is fed back to the fuel line (14) by means of an outflow (38) and via a non-return valve (40).

2. Method according to Claim 1, **characterized in that** the expeller body (30) is moved in the cavity (28) in such a way that a shear flow of the fuel is produced in a gap (52) between the expeller body (30) and the cavity (28).

3. Method according to at least one of the preceding claims, **characterized in that** the expeller body (30) in the form of a piston is moved in the cavity (28) in the form of a capillary tube, wherein the piston is moved by a spring (32) with a constant movement force from the first predetermined position (44) into the second predetermined position (42), and the movement time for the movement from the first predetermined position (44) into the second predetermined position (42) is determined.

4. Method according to at least one of Claims 1 and 2, **characterized in that** the expeller body (30) in the form of a piston is moved in the cavity (28) in the form of a cylinder which is open on both sides in such a way that a shear flow is produced between the piston and the cylinder, wherein the piston is moved with a constant speed from the first predetermined position (44) into the second predetermined position (42), and the movement force which is necessary for this for the movement from the first predetermined position (44) into the second predetermined position (42) is determined.

5. Method according to at least one of Claims 1 and 2, **characterized in that** the expeller body (30) in the form of a diaphragm piston is moved in the cavity (28) in the form of a capillary tube, wherein the diaphragm piston is moved by a spring (32) with a constant movement force from the first predetermined position (44) into the second predetermined position (42), and the movement time for the movement from the first predetermined position (44) into the second predetermined position (42) is determined.

6. Method according to at least one of the preceding claims, **characterized in that** an inflow for fuel leading to the cavity (28) is connected in a fluid-conducting fashion to the fuel supply system of the internal combustion engine via a 2/2-way valve (36).

7. Method according to at least one of the preceding claims, **characterized in that** an outflow for fuel out of the cavity (28) is connected in a fluid-conducting fashion to the fuel supply system of the internal combustion engine via a non-return valve (40).

8. Method according to at least one of the preceding claims, **characterized in that** the viscosity is read out from a table or determined from a set of equations in which assignments of movement time and/or movement force to the viscosity of the fuel are stored.

9. Method according to at least one of the preceding claims, **characterized in that** all the types of fuel, in particular diesel, petrol, naphtha, kerosene, butanol, alcohol, in particular methanol, GTL (gas to liquid) or BTL (biomass to liquid) which are present in the fuel in the fuel supply system of the internal combustion engine are determined from the determined viscosity.

10. Method according to at least one of the preceding claims, **characterized in that** at least one engine-relevant parameter, in particular a cetane number and/or a boiling point of the fuel in the fuel supply system of the internal combustion engine is determined from the determined viscosity.

11. Method according to at least one of the preceding claims, **characterized in that** at the same time as the determination of the viscosity a temperature of the fuel in the region of the expeller body (30) and/or a temperature of the expeller body (30) is determined, and the viscosity is additionally determined as a function of the temperature.

12. Method according to Claim 11, **characterized in that** a viscosity of the fuel at a predetermined standard temperature, in particular 15°C, is determined by means of the determined temperature.

13. Method according to at least one of the preceding claims, **characterized in that** an energetic injection quantity for predetermined mixtures of additional fuel, in particular mixtures having at least two of the types of fuel of diesel, petrol, naphtha, butanol, kerosene, GTL (gas to liquid) or BTL (biomass to liquid) is corrected as a function of the determined viscosity.

14. Method according to at least one of the preceding claims, **characterized in that** the fuel is kept in the cavity (28) under an excess pressure.

15. Fuel supply system for an internal combustion engine having a device for determining the viscosity of a fuel in the fuel supply system, wherein the device has a cavity (28) which can be filled without bubbles with the fuel and in which an expeller body (30) which can be shifted from a first predetermined position (44) to a second predetermined position (42) is arranged, **characterized in that** the cavity (28) is integrated, parallel to a fuel line (14), into the fuel supply system, wherein the cavity (28) is connected in a fluid-conducting fashion to the fuel line (14) by means of an inflow (34) for the fuel and via a 2/2-way valve (36) as well as by means of an outflow (38) for the fuel and via a non-return valve (40).

16. Fuel supply system according to Claim 15, **characterized in that** the cavity (28) and the expeller body (30) are arranged and embodied in such a way that during a movement of the expeller body (30) in a gap (52) a shear flow is formed between the expeller body (30) and the cavity (28).

17. Fuel supply system according to Claim 15 or 16, **characterized in that** the expeller body (30) is a piston or a diaphragm piston.

18. Fuel supply system according to at least one of Claims 15 to 17, **characterized in that** a mechanical spring device, in particular a helical spring or a gas pressure spring (32') is arranged in the cavity (28) and embodied in such a way that this mechanical spring device moves the expeller body (30) with a predetermined movement force (54) from the first predetermined position (44) to a second predetermined position (42).

19. Fuel supply system according to at least one of Claims 15 to 18, **characterized in that** a mechanical translation device is arranged in the cavity (28) and embodied in such a way that this mechanical translation device moves the expeller body (30) with a predetermined speed from the first predetermined position (44) to a second predetermined position (42).

20. Fuel supply system according to at least one of Claims 15 to 19, **characterized in that** the device is embodied as a closed system.

21. Fuel supply system according to at least one of Claims 15 to 20, **characterized by** a fuel tank (10) and at least one return line (24, 26) for the fuel, wherein fuel is fed into a circuit via the fuel tank (10), the fuel line (14) and the return line (24, 26), and wherein the device is integrated into the circuit of the fuel.

22. Fuel supply system according to Claim 21, **characterized in that** the device is arranged downstream of a pump.

## Revendications

1. Procédé destiné à détecter la viscosité d'un carburant dans un système d'alimentation de carburant d'un moteur à combustion interne, un organe de refoulement (30) dans une cavité (28) remplie sans bulles avec le carburant dans le système d'alimentation de carburant du moteur à combustion interne étant déplacé d'une première position (44) prédéfinie dans une deuxième position (42) prédéfinie, à partir du temps de déplacement nécessaire pour le déplacement et/ou de la force de déplacement nécessaire pour le déplacement à une vitesse prédéfinie étant déterminée une viscosité du carburant présent dans le système d'alimentation de carburant du moteur à combustion interne, **caractérisé en ce que** le carburant est alimenté dans la cavité (28) intégrée dans le système d'alimentation de carburant à la parallèle d'un conduit à carburant (14) au moyen d'une arrivée (34) et via une soupape à 2/2 voies (36) à partir du conduit à carburant (14) et ramené dans le conduit à carburant (14) au moyen d'une évacuation (38) et via une soupape anti-retour (40).

2. Procédé selon la revendication 1, **caractérisé en ce que** l'organe de refoulement (30) est déplacé dans la cavité (28) de telle sorte que dans un interstice (52) entre l'organe de refoulement (30) et la cavité (28), il résulte un écoulement de cisaillement du carburant.

3. Procédé selon au moins l'une quelconque des revendications précédentes, **caractérisé en ce que** l'organe de refoulement (30) sous la forme d'un piston est déplacé dans la cavité (28) sous la forme d'un tube capillaire, le piston étant déplacé par un ressort (32) avec une force de déplacement constante de la première position (44) prédéfinie dans la deuxième position (42) prédéfinie et le temps de déplacement pour le déplacement de la première position (44) prédéfinie dans la deuxième position (42) prédéfinie étant déterminé.

4. Procédé selon au moins l'une quelconque des revendications 1 ou 2, **caractérisé en ce que** l'organe de refoulement (30) sous la forme d'un piston est déplacé dans la cavité (28) sous la forme d'un cylindre ouvert de part et d'autre, de telle sorte qu'entre le piston et le cylindre, il résulte un écoulement de cisaillement, le piston étant déplacé à une vitesse constante de la première position (44) prédéfinie dans la deuxième position (42) prédéfinie et la force de déplacement nécessaire à cet effet pour le déplacement de la première position (44) prédéfinie dans la deuxième position (42) prédéfinie étant déterminée.

5. Procédé selon au moins l'une quelconque des revendications 1 ou 2, **caractérisé en ce que** l'organe de refoulement (30) sous la forme d'un piston à membrane est déplacé dans la cavité (28) sous la forme d'un tube capillaire, le piston à membrane étant déplacé par un ressort (32) avec une force de déplacement constante de la première position (44) prédéfinie dans la deuxième position (42) prédéfinie et le temps de déplacement pour le déplacement de la première position (44) prédéfinie dans la deuxième position (42) prédéfinie étant déterminé.

6. Procédé selon au moins l'une quelconque des revendications précédentes, **caractérisé en ce qu'**une arrivée pour du carburant vers la cavité (28) est reliée par conduction fluidique via une soupape à 2/2 voies (36) avec le système d'alimentation de carburant du moteur à combustion interne.

7. Procédé selon au moins l'une quelconque des revendications précédentes, **caractérisé en ce qu'**un écoulement pour du carburant hors de la cavité (28) est relié par conduction fluidique via une soupape anti-retour (40) avec le système d'alimentation de carburant du moteur à combustion interne.

8. Procédé selon au moins l'une quelconque des revendications précédentes, **caractérisé en ce que** la viscosité est lue dans un tableau ou déterminée à l'aide d'un ensemble d'équations dans lequel sont sauvegardées des affectations du temps de déplacement et/ou de la force de déplacement à la viscosité du carburant.

9. Procédé selon au moins l'une quelconque des revendications précédentes, **caractérisé en ce qu'**à partir de la viscosité déterminée, tous les types de carburants présents dans le carburant dans le système d'alimentation de carburant du moteur à combustion interne, notamment le diesel, l'essence, le naphte, le kérosène, le butanol, l'alcool, notamment le méthanol, le GTL (gas to liquid) ou le BTL (biomass to liquid) sont déterminés.

10. Procédé selon au moins l'une quelconque des revendications précédentes, **caractérisé en ce qu'**à partir de la viscosité déterminée, au moins un paramètre déterminant du moteur, notamment un indice de cétane et/ou un intervalle d'ébullition, du carburant dans le système d'alimentation de carburant du moteur à combustion interne est déterminé.

11. Procédé selon au moins l'une quelconque des revendications précédentes, **caractérisé en ce que** simultanément à la détermination de la viscosité, une température du carburant dans la zone de l'organe de refoulement (30) et/ou une température de l'organe de refoulement (30) sont déterminées et la viscosité est déterminée en supplément en fonction de la température.

12. Procédé selon la revendication 11, **caractérisé en ce qu'**au moyen de la température déterminée, une viscosité du carburant est déterminée à une température standard prédéfinie, notamment de 15°C.

13. Procédé selon au moins l'une quelconque des revendications précédentes, **caractérisé en ce que** pour des mélanges multi-carburants prédéfinis, notamment des mélanges avec au moins deux des sortes de carburants diesel, essence, naphte, butanol, kérosène, GTL (gas to liquid) ou BTL (biomass to liquid), une quantité d'injection énergétique est corrigée en fonction de la viscosité déterminée.

14. Procédé selon au moins l'une quelconque des revendications précédentes, **caractérisé en ce que** le carburant est réservé dans la cavité (28) sous une surpression.

15. Système d'alimentation de carburant pour un moteur à combustion interne avec un dispositif destiné à déterminer la viscosité d'un carburant dans le système d'alimentation de carburant, le dispositif comportant une cavité (28) susceptible d'être remplie sans bulles avec le carburant, dans laquelle est placé un organe de refoulement (30) déplaçable d'une première position (44) prédéfinie dans une deuxième position (42) prédéfinie, **caractérisé en ce que** la cavité (28) est intégrée dans le système d'alimentation de carburant à la parallèle d'un conduit à carburant (14), la cavité (28) étant reliée par conduction fluidique au moyen d'une arrivée (34) pour le carburant et via une soupape à 2/2 voies (36), ainsi qu'au moyen d'une évacuation (38) pour le carburant et via une soupape anti-retour (40) avec le conduit à carburant (14).

16. Système d'alimentation de carburant selon la revendication 15, **caractérisé en ce que** la cavité (28) et l'organe de refoulement (30) sont placés et conçus de telle sorte que lors d'un déplacement de l'organe de refoulement (30), il se forme un écoulement de cisaillement dans un interstice (52) entre l'organe de refoulement (30) et la cavité (28).

17. Système d'alimentation de carburant selon la revendication 15 ou la revendication 16, **caractérisé en ce que** l'organe de refoulement (30) est un piston ou un piston à membrane.

18. Système d'alimentation de carburant selon au moins l'une quelconque des revendications 15 à 17, **caractérisé en ce que** dans la cavité (28), un dispositif à ressort mécanique, notamment un ressort cylindrique ou un ressort à pression de gaz (32'), est placé et conçu de telle sorte que ce dispositif à ressort mécanique déplace l'organe de refoulement (30) avec une force de déplacement (54) prédéfinie de la première position (44) prédéfinie dans une deuxième position (42) prédéfinie.

19. Système d'alimentation de carburant selon au moins l'une quelconque des revendications 15 à 18, **caractérisé en ce que** dans la cavité (28), un dispositif de translation mécanique est placé et conçu de telle sorte que ce dispositif de translation mécanique déplace l'organe de refoulement (30) à une vitesse prédéfinie de la première position (44) prédéfinie dans une deuxième position (42) prédéfinie.

20. Système d'alimentation de carburant selon au moins l'une quelconque des revendications 15 à 19, **caractérisé en ce que** le dispositif est conçu en tant que système fermé.

21. Système d'alimentation de carburant selon au moins l'une quelconque des revendications 15 à 20, **caractérisé par** un réservoir à carburant (10) et au moins un retour (24, 26) pour le carburant, du carburant étant transporté via le réservoir à carburant (10), le conduit à carburant (14) et le retour (24, 26) dans un circuit et le dispositif étant intégré dans le circuit du carburant.

22. Système d'alimentation de carburant selon la revendication 21, **caractérisé en ce que** le dispositif est placé en aval d'une pompe.
